# EUROPÄISCHE PATENTANMELDUNG

(11) **EP 3 890 252 A1**
(43) Veröffentlichungstag der Anmeldung: **06.10.2021**
(21) Anmeldenummer: 20167021.3
(22) Anmeldetag: 31.03.2020
(51) Int. Cl.: H04L 12/707, H04L 29/08, H04B 7/04, H04B 7/12

(54) **FUNK-KOMMUNIKATIONSGERÄT UND FUNK-KOMMUNIKATIONSSYSTEM**

(71) Anmelder: Siemens Aktiengesellschaft, 80333 München (DE)
(72) Erfinder: Lampe, Mattias, Beijing, 100102 (CN); Meyer, Martin, 90425 Nürnberg (DE); Richter, Siegfried, 91207 Lauf (DE); Sinn, Ulrich, 91056 Erlangen (DE); Weiler, Christoph, 75015 Bretten (DE); Löser, Kilian, 90480 Nürnberg (DE)

(57) **Zusammenfassung**

Die Erfindung betrifft ein Funk-Kommunikationsgerät mit einem mehrere Anschlüsse (201-202) umfassenden Transceiver (200), der dazu ausgestaltet und eingerichtet ist, an den Anschlüssen Funksignale über Trägerfrequenzen in einem ersten Frequenzbereich zu senden bzw. zu empfangen, eine Empfangssignalqualität pro Anschluss zu ermitteln und in Abhängigkeit von der ermittelten Empfangssignalqualität einen Anschluss zur Weiterleitung bzw. Verarbeitung empfangener Funksignale auszuwählen. Zumindest eine mit einem ersten Anschluss (201) des Transceivers verbundenen erste Antenne (211) ist dazu ausgestaltet und eingerichtet, Funksignale über Trägerfrequenzen im ersten Frequenzbereich zu senden bzw. zu empfangen. Außerdem umfasst zumindest ein mit einem zweiten Anschluss (202) des Transceivers verbundener Frequenzumsetzer (220) einen Mischer (221), einen Oszillator (222) sowie einen Antennenanschluss (223) und ist dazu ausgestaltet und eingerichtet, Funksignale zwischen dem ersten Frequenzbereich und einem zweiten Frequenzbereich umzusetzen.

## Beschreibung

Die vorliegende Erfindung betrifft ein Funk-Kommunikationsgerät, das als Basisstation oder auch als Teilnehmerstation eines Funk-Kommunikationssystems insbesondere eines industriellen Automatisierungssystems genutzt werden kann, sowie ein mehrere solcher Funk-Kommunikationsgeräte umfassendes Funk-Kommunikationssystem.

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden. Eine drahtlose Übermittlung derartiger Daten gewinnt in industriellen Automatisierungssystemen zunehmend an Bedeutung.

Aus US 2005/255821 A1 ist ein Frequenzumsetzer bekannt, der ein Funksignal aus einem ersten Frequenzbereich in einen zweiten Frequenzbereich umsetzt. Der dort beschriebene Frequenzumsetzer ist für eine bidirektionale Umsetzung von digital codierten Daten vorgesehen, die über zwei Trägerfrequenzen übermittelt werden. Insbesondere erfolgt mit dem Frequenzumsetzer eine Umsetzung zwischen dem 2,4-GHz-ISM-Band und dem 5,0-GHz- bis 6,0-GHz-U-NII-Band.

WO 2014/188413 A1 betrifft ein Funk-Kommunikationssystem mit mehreren Funkzellen, das einen Netzwerkknoten umfasst, der eine ausreichende Kapazität zur Kommunikation mit mindestens einem anderen Netzwerkknoten bei einer gegebenen Mittenfrequenz aufweist. Separat vom Netzwerkknoten ist mindestens ein externer Frequenzumsetzer vorgesehen, mittels dessen der Netzwerkknoten mit einem anderen Netzwerkknoten entsprechend einem Funk-Kommunikationsprotokoll, das eine von der gegebenen Mittenfrequenz abweichende Mittenfrequenz vorsieht, Daten austauschen kann.

An Funk-Kommunikationssysteme für industrielle Automatisierungssysteme werden üblicherweise hohe Anforderungen gestellt. Insbesondere sollen Funk-Kommunikationssysteme eine robuste und im Wesentlichen unterbrechungsfreie Kommunikation ermöglichen. Dies kann grundsätzlich mittels Antennendiversität erreicht werden, die in vielen Fällen eine Kompensation schlechter Empfangssignale auf Grund signalverfälschender Ausbreitungsbedingungen erlaubt. Jedoch hilft Antennendiversität im Prinzip bei gegen Störsignalquellen, die auf verwendeten Trägerfrequenzen auftreten.

Der vorliegenden Erfindung liegt die Aufgabe zugrunde, ein kostengünstig zu realisierendes Funk-Kommunikationsgerät zu schaffen, das eine störungsunempfindliche, im Wesentlichen unterbrechungsfreie Kommunikation ermöglicht, und ein entsprechendes Funk-Kommunikationssystem anzugeben.

Diese Aufgabe wird erfindungsgemäß durch ein Funk-Kommunikationsgerät mit den in Anspruch 1 angegebenen Merkmalen und durch ein Funk-Kommunikationssystem mit den in Anspruch 13 angegebenen Merkmalen gelöst. Vorteilhafte Weiterbildungen der vorliegenden Erfindung sind in den abhängigen Ansprüchen angegeben.

Das erfindungsgemäße Funk-Kommunikationsgerät umfasst einen mehrere Anschlüsse umfassenden Transceiver (Sende- und Empfangseinheit), der dazu ausgestaltet und eingerichtet ist, an den Anschlüssen Funksignale über Trägerfrequenzen in einem ersten Frequenzbereich zu senden bzw. zu empfangen. Außerdem ist der Transceiver dazu ausgestaltet und eingerichtet, pro Anschluss eine Empfangssignalqualität zu ermitteln und in Abhängigkeit von der ermittelten Empfangssignalqualität einen Anschluss zur Weiterleitung bzw. Verarbeitung empfangener Funksignale auszuwählen. Vorzugsweise ist der Transceiver dazu ausgestaltet und eingerichtet, den Anschluss zur Weiterleitung bzw. Verarbeitung der empfangenen Funksignale in Abhängigkeit eines Maximalwerts aus einem Vergleich der jeweils ermittelten Empfangssignalqualität bzw. zumindest eines Qualitätsparameters auszuwählen.

Für den Transceiver kann auf in hohen Stückzahlen verfügbare WLAN-Chipsätze zurückgegriffen werden, was eine kostengünstige Realisierung des erfindungsgemäßen Funk-Kommunikationsgeräts ermöglicht. Insbesondere können auf dieser Grundlage Funk-Kommunikationsgeräte mit hohen Datenraten realisiert werden wie sie von WLAN-Kommunikationsgeräten entsprechend IEEE 802.11 n oder IEEE 802.11 ac bekannt sind.

Darüber hinaus umfasst das erfindungsgemäße Funk-Kommunikationsgerät zumindest eine mit einem ersten Anschluss des Transceivers verbundene ersten Antenne, die dazu ausgestaltet und eingerichtet ist, Funksignale über Trägerfrequenzen im ersten Frequenzbereich zu senden bzw. zu empfangen. Des Weiteren ist zumindest ein mit einem zweiten Anschluss des Transceivers verbundener Frequenzumsetzer vorgesehen, der einen Mischer, einen Oszillator sowie einen Antennenanschluss umfasst und dazu ausgestaltet und eingerichtet ist, Funksignale zwischen dem ersten Frequenzbereich und einem zweiten Frequenzbereich umzusetzen. Der Frequenzumsetzer kann insbesondere ein Transverter sein. Vorzugsweise ist der Mischer des Frequenzumsetzers dazu ausgestaltet und eingerichtet, Funksignale zwischen dem ersten Frequenzbereich und dem zweiten Frequenzbereich auf Basis eines zugeführten Oszillatorsignals umzusetzen. Erfindungsgemäß ist zusätzlich zumindest eine mit dem Antennenanschluss des Frequenzumsetzers verbundene zweiten Antenne vorgesehen, die dazu ausgestaltet und eingerichtet ist, Funksignale über Trägerfrequenzen im zweiten Frequenzbereich zu senden bzw. zu empfangen.

Mittels Antennendiversität lassen sich Störsignalquellen grundsätzlich kompensieren, indem Sender und Empfänger auf eine andere Trägerfrequenz wechseln. Dies kann jedoch zu temporären Verzögerungen und Unterbrechungen in einem Funk-Kommunikationssystem führen. Mit dem erfindungsgemäßen Funk-Kommunikationsgerät werden Unterbrechungen reduziert bzw. vermeiden, indem Funksignale über Trägerfrequenzen in zwei unterschiedlichen Frequenzbereichen übertragen werden.

Darüber hinaus lässt sich der Frequenzumsetzer, insbesondere als externer Transverter, leicht in bestehende Funk-Kommunikationsgeräte integrieren und ermöglicht eine Verwendung zusätzlicher, bisher nicht allgemein nutzbarer Frequenzbereiche, in denen Störsignalquellen weniger wahrscheinlich sind. Dabei können Weiterentwicklungen von WLAN-Kommunikationssystemen genutzt werden, die eine Verwendung von Frequenzbereichen im 3-4-GHz-Band ermöglichen, auch wenn diese international noch nicht einheitlich festgelegt sind und eine Nutzung dieser Frequenzbereiche landesspezifischen Lizenzvergabeverfahren unterliegt.

Vorzugsweise ist das Funk-Kommunikationsgerät dazu ausgestaltet und eingerichtet, als Basisstation bzw. als Teilnehmerstation eines Funk-Kommunikationssystems betrieben zu werden, das zumindest eine Basisstation und mehrere Teilnehmerstationen umfasst. Insbesondere kann das Funk-Kommunikationsgerät ein WLAN Access Point oder ein WLAN Client sein. Dabei liegt der erste Frequenzbereich beispielsweise bei 2,4 GHz bzw. im 5-GHz-Band, während der zweite Frequenzbereich bei zumindest einer Frequenz zwischen 3,0 GHz und 4,5 GHz liegen kann. Das 5-GHz-Band umfasst insbesondere Trägerfrequenzen zwischen 5,0 GHz und 5,8 GHz wie dies beispielsweise entsprechend IEEE 802.11 a/h/j/n/ac/ax spezifiziert ist.

Entsprechend einer vorteilhaften Ausgestaltung der vorliegenden Erfindung umfasst die ermittelte Empfangssignalqualität als Qualitätsparameter Empfangsfeldstärke, Bitfehlerrate bzw. Paketfehlerrate. Insbesondere kann der Transceiver dazu ausgestaltet und eingerichtet sein, die Empfangssignalqualität zyklisch oder bei Änderungen von Qualitätsparametern, die ein vorgegebenes Maß überschreiten, zu ermitteln.

Der Transceiver kann beispielsweise dazu ausgestaltet und eingerichtet sein, Funksignale über die erste Antenne und über die zweite Antenne im Wesentlichen zeitgleich zu senden. Entsprechend einer alternativen Ausführungsform der vorliegenden Erfindung ist der Transceiver dazu ausgestaltet und eingerichtet, Funksignale zunächst nur über die erste Antenne oder nur über die zweite Antenne und erst nach einer vorgegebenen Zeit bzw. nach einer vorgegebenen Anzahl fehlgeschlagener Sendeversuche über die zweite Antenne bzw. über die erste Antenne zu senden. Mit dieser Ausführungsform wird im Vergleich zur einem permanenten gleichzeitigen Senden weniger HF-Spektrum pro Sendevorgang belegt.

Entsprechend einer bevorzugten Ausgestaltung des erfindungsgemäßen Funk-Kommunikationsgeräts ist der Frequenzumsetzer dazu ausgestaltet und eingerichtet, Funksignale bidirektional zwischen dem ersten Frequenzbereich und dem zweiten Frequenzbereich umzusetzen. Vorteilhafterweise umfasst der Frequenzumsetzer einen Umschalter zwischen einem Sendebetrieb und einem Empfangsbetrieb. Auf diese Weise kann eine zuverlässige bidirektionale Frequenzumsetzung gewährleistet werden.

Das erfindungsgemäße Funk-Kommunikationssystem umfasst mehrere jeweils einer Funkzelle zugeordnete und als Basisstation betriebene Funk-Kommunikationsgeräten sowie mehrere jeweils mit einer Basisstation verbindbare und als Teilnehmerstation betriebene Funk-Kommunikationsgeräten. Dabei sind die Funk-Kommunikationsgeräte jeweils entsprechend vorangehenden Ausführungen ausgestaltet und eingerichtet. Vorzugsweise ist benachbarten Funkzellen jeweils ein unterschiedlicher erster Frequenzbereich zugewiesen, während der zweite Frequenzbereich für alle Funkzellen gleich ist. Somit können Funk-Kommunikationsgeräte in sämtlichen Funkzellen bei Störungen einen einheitliche Ausweichfrequenzen benutzen.

Die vorliegende Erfindung wird nachfolgend an einem Ausführungsbeispiel anhand der Zeichnung näher erläutert. Es zeigt
- Figur 1: Funk-Kommunikationssystem für ein industrielles Automatisierungssystem mit einem WLAN Access Point und mehreren WLAN Clients,
- Figur 2: eine schematische Darstellung eines Aufbaus eines WLAN Access Points oder WLAN Clients entsprechend Figur 1.

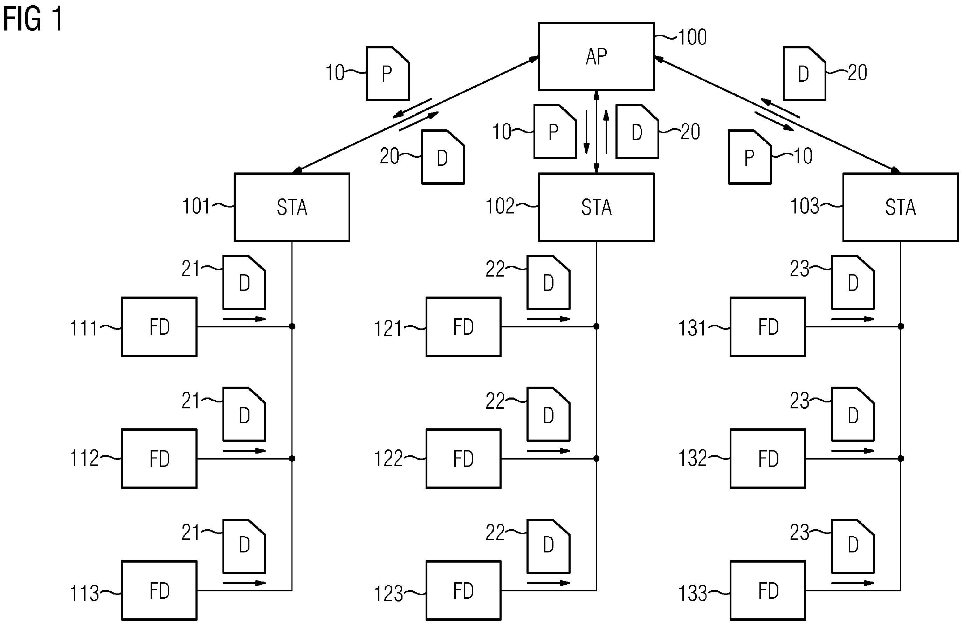

Das in Figur 1 dargestellte Funk-Kommunikationssystem umfasst einen WLAN Access Point 100 als Funk-Basisstation und mehrere drahtlos mit diesem verbindbare WLAN Clients 101-103 als Funk-Teilnehmerstationen. An die WLAN Clients 101-103 sind im vorliegenden Ausführungsbeispiel jeweils mehrere Automatisierungs- bzw. Feldgeräte 111-113, 121-123, 131-133 eines industriellen Automatisierungssystems angeschlossen. Zu Automatisierungsgeräten zählen insbesondere speicherprogrammierbaren Steuerungen, Eingabe/Ausgabe-Einheiten (I/O-Module) oder Bedien- und Beobachtungsstationen des industriellen Automatisierungssystems.

Speicherprogrammierbare Steuerungen umfassen typischerweise jeweils ein Kommunikationsmodul, eine Zentraleinheit sowie zumindest eine Eingabe/Ausgabe-Einheit. Eingabe/Ausgabe-Einheiten können grundsätzlich auch als dezentrale Peripheriemodule ausgestaltet sein, die entfernt von einer speicherprogrammierbaren Steuerung angeordnet sind. Über ihr Kommunikationsmodul kann eine speicherprogrammierbare Steuerung beispielsweise mit einem Switch oder Router oder zusätzlich mit einem Feldbus verbunden werden. Die Eingabe/AusgabeEinheit dient einem Austausch von Steuerungs- und Messgrößen zwischen einer speicherprogrammierbaren Steuerung und einem mit der speicherprogrammierbaren Steuerung verbundenen Sensor bzw. einer gesteuerten Maschine oder Anlage. Ein Sensor bzw. eine Maschine oder Anlage kann grundsätzlich auch über das Funk-Kommunikationssystem mit einer speicherprogrammierbaren Steuerung verbunden werden. Die Zentraleinheit einer speicherprogrammierbaren Steuerung ist insbesondere für eine Ermittlung geeigneter Steuerungsgrößen aus erfassten Messgrößen vorgesehen. Obige Komponenten einer speicherprogrammierbaren Steuerung können beispielsweise über ein Rückwandbus-System miteinander verbunden werden.

Eine Bedien- und Beobachtungsstation dient insbesondere zur Visualisierung von Prozessdaten bzw. Mess- und Steuerungsgrößen, die durch speicherprogrammierbare Steuerungen, Eingabe/Ausgabe-Einheiten oder Sensoren verarbeitet bzw. erfasst werden. Insbesondere wird eine Bedien- und Beobachtungsstation zur Anzeige von Werten eines Regelungskreises und zur Veränderung von Regelungsparametern verwendet. Bedien- und Beobachtungsstationen umfassen zumindest eine graphische Benutzerschnittstelle, ein Eingabegerät, eine Prozessoreinheit und ein Kommunikationsmodul.

Insbesondere sind der WLAN Access Point 100 einerseits und die WLAN Clients 101-103 andererseits dafür ausgestaltet und eingerichtet, miteinander Datenrahmen 10, 20 auszutauschen. Die Datenrahmen 10, 20 können einerseits Polling-Nachrichten 10 und andererseits mittels der Polling-Nachrichten 10 durch den WLAN Access Point 100 von den WLAN Clients 101-103 abgefragte Steuerungsdaten 20 umfassen, insbesondere Prozessdaten bzw. Mess- und Steuerungsgrößen, die mit den WLAN Clients 101-103 verbundenen Steuerungen, Aktoren, Sensoren, Maschinen oder Anlagen zugeordnet sind.

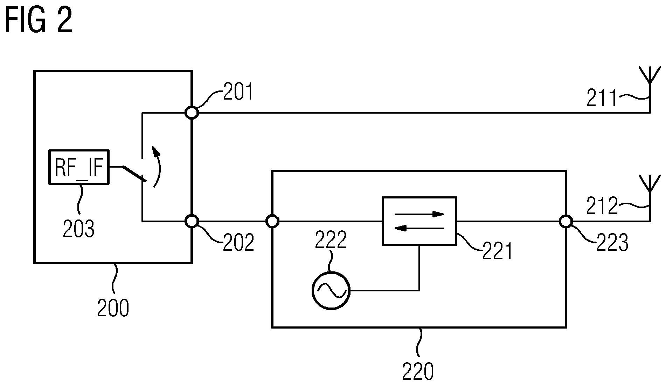

Grundsätzlich basieren der WLAN Access Point 100 und die WLAN-Clients 101-103 auf üblichen WLAN-Geräten, die in einem Frequenzbereich bei 2,4 GHz bzw. im 5-GHz-Band Funksignale senden und empfangen. Diese Funktion wird jeweils durch einen in Figur 2 dargestellten Transceiver 200 mit zumindest zwei Anschlüssen 201-202 abgedeckt, der dazu ausgestaltet und eingerichtet ist, an seinen Anschlüssen 201-202 Funksignale über Trägerfrequenzen in einem ersten Frequenzbereich, der bei 2,4 GHz bzw. im 5-GHz-Band liegt, zu senden und zu empfangen. Außerdem ist der Transceiver 200 dafür vorgesehen, eine Empfangssignalqualität pro Anschluss 201-202 zu ermitteln und in Abhängigkeit von der ermittelten Empfangssignalqualität einen Anschluss zur Weiterleitung bzw. Verarbeitung empfangener Funksignale auszuwählen. Hierzu umfasst der Transceiver 200 eine Steuerungseinheit 203, durch die der jeweilige Anschluss 201-202 ausgewählt wird.

Der Transceiver 200 wählt den Anschluss zur Weiterleitung bzw. Verarbeitung der empfangenen Funksignale im vorliegenden Ausführungsbeispiel in Abhängigkeit eines Maximalwerts aus einem Vergleich der jeweils ermittelten Empfangssignalqualität bzw. zumindest eines Qualitätsparameters aus. Die ermittelte Empfangssignalqualität umfasst als Qualitätsparameter beispielsweise Empfangsfeldstärke, Bitfehlerrate bzw. Paketfehlerrate. Grundsätzlich kann der Transceiver 200 die Empfangssignalqualität sowohl zyklisch als auch ereignisabhängig, insbesondere bei Änderungen von Qualitätsparametern, die ein vorgegebenes Maß überschreiten, ermitteln.

Entsprechend Figur 2 sind jeweils zumindest zwei Antennen 211-212 vorgesehen, mittels derer Funksignale über Trägerfrequenzen im ersten Frequenzbereich und in einem zweiten Frequenzbereich gesendet und empfangen werden. Der zweite Frequenzbereich liegt vorzugsweise bei zumindest einer Frequenz zwischen 3,0 GHz und 4,5 GHz. In Deutschland beispielweise können nach entsprechender Lizenzeinräumung Trägerfrequenzen in einem Bereich bei 3,7 bis 3,8 GHz genutzt werden. Auch in anderen Ländern ist dies möglich. Allerdings weichen dort nutzbare Trägerfrequenzen von o.g. Bereich ab.

Mit einem ersten Anschluss 201 des Transceivers 200 ist eine erste Antenne 211 verbunden, durch die Funksignale über Trägerfrequenzen im ersten Frequenzbereich gesendet und empfangen werden. Dagegen ist mit einem zweiten Anschluss 202 des Transceivers 200 ein Frequenzumsetzer bzw. Transverter 220 verbunden. Der Transverter 220 umfasst einen Mischer 221, einen Oszillator 222 sowie einen Antennenanschluss 223 und ist dazu ausgestaltet und eingerichtet, Funksignale zwischen dem ersten Frequenzbereich und dem zweiten Frequenzbereich umzusetzen. Dabei setzt der Mischer 221 Funksignale zwischen dem ersten Frequenzbereich und dem zweiten Frequenzbereich auf Basis eines zugeführten Oszillatorsignals um, und zwar bidirektional. Insbesondere umfasst der Transverter 220 für eine bidirektionale Frequenzumsetzung einen Umschalter zwischen einem Sendebetrieb und einem Empfangsbetrieb.

An den Antennenanschluss 223 des Transverters 200 ist eine zweiten Antenne 212 angeschlossen, die dazu vorgesehen ist, Funksignale über Trägerfrequenzen im zweiten Frequenzbereich zu senden bzw. zu empfangen. Der Transceiver 200 kann beispielweise dafür konfiguriert sein, Funksignale über die erste Antenne 211 und über die zweite Antenne 212 gleichzeitig zu senden. Alternativ dazu kann der Transceiver 200 dazu ausgestaltet und eingerichtet sein, Funksignale zunächst entweder nur über die erste Antenne oder nur über die zweite Antenne zu senden. Erst nach einer vorgegebenen Zeit bzw. nach einer vorgegebenen Anzahl fehlgeschlagener Sendeversuche sendet der Transceiver 200 die Funksignale über die zuvor nicht genutzte zweite 212 bzw. erste Antenne 211.

Mit einem Funk-Kommunikationsgerät entsprechend vorangehenden Ausführungen kann ein Funk-Kommunikationssystem realisiert werden, das mehrere jeweils einer Funkzelle zugeordnete und als Basisstation betriebene Funk-Kommunikationsgeräte sowie mehreren jeweils mit einer Basisstation verbindbare und als Teilnehmerstation betriebene Funk-Kommunikationsgeräte umfasst. Vorzugsweise ist benachbarten Funkzellen jeweils ein unterschiedlicher erster Frequenzbereich zugewiesen, während der zweite Frequenzbereich für alle Funkzellen gleich ist. Auf diese Weise wird ein einheitliches Ausweichfrequenzband genutzt, um Störungen in einem originär genutzten Frequenzband mittels Antennendiversität kompensieren zu können.

## Patentansprüche

1. Funk-Kommunikationsgerät mit
- einem mehrere Anschlüsse (201-202) umfassenden Transceiver (200), der dazu ausgestaltet und eingerichtet ist, an den Anschlüssen Funksignale über Trägerfrequenzen in einem ersten Frequenzbereich zu senden und/oder zu empfangen, eine Empfangssignalqualität pro Anschluss zu ermitteln und in Abhängigkeit von der ermittelten Empfangssignalqualität einen Anschluss zur Weiterleitung und/oder Verarbeitung empfangener Funksignale auszuwählen,
- zumindest einer mit einem ersten Anschluss (201) des Transceivers verbundenen ersten Antenne (211), die dazu ausgestaltet und eingerichtet ist, Funksignale über Trägerfrequenzen im ersten Frequenzbereich zu senden und/oder zu empfangen,
- zumindest einem mit einem zweiten Anschluss (202) des Transceivers verbundenen Frequenzumsetzer (220), der einen Mischer (221), einen Oszillator (222) sowie einen Antennenanschluss (223) umfasst und dazu ausgestaltet und eingerichtet ist, Funksignale zwischen dem ersten Frequenzbereich und einem zweiten Frequenzbereich umzusetzen,
- zumindest einer mit dem Antennenanschluss des Frequenzumsetzers verbundenen zweiten Antenne (212), die dazu ausgestaltet und eingerichtet ist, Funksignale über Trägerfrequenzen im zweiten Frequenzbereich zu senden und/oder zu empfangen.

2. Funk-Kommunikationsgerät nach Anspruch 1,
bei dem die ermittelte Empfangssignalqualität als Qualitätsparameter Empfangsfeldstärke, Bitfehlerrate und/oder Paketfehlerrate umfasst.

3. Funk-Kommunikationsgerät nach Anspruch 1 oder 2,
bei dem der Transceiver dazu ausgestaltet und eingerichtet ist, die Empfangssignalqualität zyklisch oder bei ein vorgegebenes Maß überschreitenden Änderungen von Qualitätsparametern zu ermitteln.

4. Funk-Kommunikationsgerät nach einem der Ansprüche 1 bis 3,
bei dem der Transceiver dazu ausgestaltet und eingerichtet ist, den Anschluss zur Weiterleitung und/oder Verarbeitung der empfangenen Funksignale in Abhängigkeit eines Maximalwerts aus einem Vergleich der jeweils ermittelten Empfangssignalqualität und/oder zumindest eines Qualitätsparameters auszuwählen.

5. Funk-Kommunikationsgerät nach einem der Ansprüche 1 bis 4,
bei dem der Transceiver dazu ausgestaltet und eingerichtet ist, Funksignale über die erste Antenne und über die zweite Antenne im Wesentlichen zeitgleich zu senden.

6. Funk-Kommunikationsgerät nach einem der Ansprüche 1 bis 4,
bei dem der Transceiver dazu ausgestaltet und eingerichtet ist, Funksignale zunächst nur über die erste Antenne oder nur über die zweite Antenne und erst nach einer vorgegebenen Zeit und/oder nach einer vorgegebenen Anzahl fehlgeschlagener Sendeversuche über die zweite Antenne bzw. über die erste Antenne zu senden.

7. Funk-Kommunikationsgerät nach einem der Ansprüche 1 bis 6,
bei dem der Mischer des Frequenzumsetzers dazu ausgestaltet und eingerichtet ist, Funksignale zwischen dem ersten Frequenzbereich und dem zweiten Frequenzbereich auf Basis eines zugeführten Oszillatorsignals umzusetzen.

8. Funk-Kommunikationsgerät nach einem der Ansprüche 1 bis 7,
bei dem der Frequenzumsetzer dazu ausgestaltet und eingerichtet ist, Funksignale bidirektional zwischen dem ersten Frequenzbereich und dem zweiten Frequenzbereich umzusetzen.

9. Funk-Kommunikationsgerät nach Anspruch 8,
bei dem der Frequenzumsetzer einen Umschalter zwischen einem Sendebetrieb und einem Empfangsbetrieb umfasst.

10. Funk-Kommunikationsgerät nach einem der Ansprüche 1 bis 9,
bei dem das Funk-Kommunikationsgerät dazu ausgestaltet und eingerichtet ist, als Basisstation und/oder als Teilnehmerstation eines Funk-Kommunikationssystems betrieben zu werden, das zumindest eine Basisstation und mehrere Teilnehmerstationen umfasst.

11. Funk-Kommunikationsgerät nach Anspruch 10,
bei dem das Funk-Kommunikationsgerät ein WLAN Access Point oder ein WLAN Client ist.

12. Funk-Kommunikationsgerät nach Anspruch 10 oder 11,
bei dem der erste Frequenzbereich bei 2,4 GHz und/oder im 5-GHz-Band liegt und bei dem der zweite Frequenzbereich bei zumindest einer Frequenz zwischen 3,0 GHz und 4,5 GHz liegt.

13. Funk-Kommunikationssystem mit
- mehreren jeweils einer Funkzelle zugeordneten und als Basisstation betriebenen Funk-Kommunikationsgeräten,
- mehreren jeweils mit einer Basisstation verbindbaren und als Teilnehmerstation betriebenen Funk-Kommunikationsgeräten,
- wobei die Funk-Kommunikationsgeräte jeweils entsprechend einem der Ansprüche 1 bis 12 ausgeführt sind.

14. Funk-Kommunikationssystem nach Anspruch 13,
bei dem benachbarten Funkzellen jeweils ein unterschiedlicher erster Frequenzbereich zugewiesen ist und bei dem der zweite Frequenzbereich für alle Funkzellen gleich ist.
